# EUROPÄISCHE PATENTSCHRIFT

(11) **EP 3 684 643 B1**
(45) Veröffentlichungstag und Bekanntmachung des Hinweises auf die Patenterteilung: **23.03.2022**
(21) Anmeldenummer: 18755804.4
(22) Anmeldetag: 15.08.2018
(51) Int. Cl.: B60L 53/12, B60L 53/36, B60L 53/39, B60L 53/30, G05D 1/02

(54) **VERFAHREN ZUM BETRIEB EINER INDUKTIVEN ÜBERTRAGUNGSEINRICHTUNG**
METHOD FOR OPERATING AN INDUCTIVE TRANSMISSION DEVICE
PROCÉDÉ POUR FAIRE FONCTIONNER UN DISPOSITIF DE TRANSMISSION PAR INDUCTION

(30) Priorität: 21.09.2017 DE 102017216726
(43) Veröffentlichungstag der Anmeldung: 29.07.2020
(73) Patentinhaber: Robert Bosch GmbH, 70442 Stuttgart (DE)
(72) Erfinder: BRENNER, Ulrich, 71696 Moeglingen (DE); MADER, Bernhard, 71394 Kernen (DE)
(86) Internationale Anmeldenummer: PCT/EP2018/072107
(87) Internationale Veröffentlichungsnummer: WO 2019/057404

(56) Entgegenhaltungen:
- WO-A1-2015/097995
- DE-A1-102014 015 644
- FR-A1- 3 035 831
- US-A1- 2012 133 215
- US-B2- 7 243 752

## Beschreibung

Die vorliegende Erfindung betrifft ein Verfahren zum Betrieb einer induktiven Übertragungseinrichtung gemäß dem Oberbegriff des Anspruches 1, wie aus der DE 10 2014 015 644 A1 oder der US 2012/133215 A1 bekannt.

Weitere Verfahren und Vorrichtungen zum Betrieb einer induktiven Übertragungseinrichtung zur induktiven Übertragung von elektrischer Energie an einen elektrischen Energiespeicher sind aus der FR 3 035 831 A1 und der WO 2015/097995 A bekannt.

### Stand der Technik

Beim drahtlosen Laden der elektrischen Energiespeicher von elektrisch angetriebenen Fahrzeugen mit Hilfe der induktiven Übertragung von elektrischer Energie werden Übertragungssysteme eingesetzt, die aus einer Sendespule und einer Empfangsspule bestehen. Die Sendespule einer Ladestation wird dazu beispielsweise mit einer flachen Wicklung auf die Fahrbahnoberfläche gelegt oder in die Fahrbahn eingelassen. Die Empfangsspule mit einer möglichst flachen Wicklung wird am Fahrzeugboden angebracht. Für den Ladevorgang wird das Fahrzeug über der Sendespule positioniert. Diese Systeme zur drahtlosen Energieübertragung mittels eines Magnetfeldes, welches von der Sendespule ausgehend in der Empfangsspule einen elektrischen Strom induziert, sind in ihrem Wirkungsgrad in ausgeprägter Weise von der korrekten Ausrichtung von Sende- und Empfangsspule abhängig. Bei einer sehr guten Ausrichtung ergibt sich ein optimaler Koppelfaktor zwischen der Sende- und der Empfangsspule. Bereits kleine Abweichungen von der idealen Ausrichtung führen zu einem signifikanten Abfall des Wirkungsgrades der Übertragung zwischen Sende- und Empfangsspule. Damit ist eine große Auswirkung auf den Systemwirkungsgrad von induktiven Übertragungseinrichtungen verbunden. Die Übertragung von elektrischer Energie kann nur in eine Richtung von der Sendespule zu der Empfangsspule erfolgen, es kann aber auch bei entsprechenden Systemen eine Energieübertragung in beide Richtungen erfolgen.

Zum induktiven Laden der elektrischen Energiespeicher von elektrisch angetriebenen Fahrzeugen wird die Feinpositionierung des Fahrzeuges mit der Empfangsspule gegenüber der Sendespule durch den Fahrer oder über ein automatisiertes Parksystem vorgenommen. Bei der Positionierung des Fahrzeugs durch den Fahrer kann dieser durch ein Assistenzsystem unterstützt werden, da die Positionierung alleine durch die Sinne und Fertigkeiten des Fahrers in der Regel nicht zu einer optimalen Ausrichtung der Sende- und Empfangsspule führt. Zusätzlich kann durch die geometrische Gestaltung der Spulen eine vergrößerte Positionstoleranz erzielt werden. Damit kann beispielsweise die Anforderung an die Positionsgenauigkeit quer zur Fahrrichtung aufgeweitet werden, während die Positionstoleranz in Fahrtrichtung aufgrund der einfacheren Positionierung des Fahrzeugs durch Vorwärts- und Rückwärtsfahrt zur Erreichung eines optimalen Koppelfaktors eng gewählt werden kann.

Bei Unterstützung des Fahrers durch ein Assistenzsystem wird eine verbesserte Positionierungsgenauigkeit erreicht. Dazu sind allerdings zusätzliche Mess-Systeme erforderlich, welche Zusatzkosten verursachen und für den rauen Einsatz mit Kraftfahrzeugen geeignet sein müssen. Beispielsweise wird in DE 10 2014 215 350 A1 ein System vorgeschlagen, welches eine Empfängerspulenanordnung am Fahrzeug umfasst, die drei Magnetfeldkomponenten des Magnetfelds der Sendespule durch Messung erfasst. Die erfassten Magnetfeldkomponenten und die Phasenbeziehungen zu dem elektrischen Wechselstromsignal werden durch eine Auswerteeinrichtung so ausgewertet, dass eine Feinpositionierungsinformation zur Verfügung steht. Die Feinpositionierungsinformation wird als Schnittmenge der Grobpositionsinformationen ermittelt, welche die Positionsinformation der Empfängerspulenanordnung relativ zu der Sendespulenanordnung aufweist bzw. ergibt.

Weiterhin wird in der DE 10 2015 106 317 A1 eine Sendespule vorgeschlagen, welche eine Anordnung mit einem Leitlicht umfasst. Dieses mindestens eine elektrische Leuchtelement wird verwendet, um die Position des elektromechanischen Übertragungsgliedes anzuzeigen. Dadurch, dass an einer Oberfläche der Bodenplatte ein elektrisches Leuchtelement angeordnet ist, kann auch bei schlechten Beleuchtungsverhältnissen und schlechten Witterungsverhältnissen die Position der Bodenplatte und des darin angeordneten elektromagnetischen Übertragungsgliedes von einem Fahrer eines Kraftfahrzeugs erkannt werden, so dass eine präzise Positionierung des Kraftfahrzeugs auf der Bodenplatte bzw. über dem elektromagnetischen Übertragungsglied und eine damit verbundene effektive Übertragung von elektromagnetischer Energie möglich ist. Das mindestens eine Leuchtelement ist verbunden mit einer Steuereinheit, welche das Leuchtelement bei Annäherung eines Fahrzeugs aktiviert bzw. nach erfolgter Positionierung wieder deaktiviert. Weiterhin ist über eine Steuereinheit eine Sensierung des Umgebungslichts zugeordnet, über welche die Intensität der Lichtleistung des Leuchtelements auf Grundlage des erfassten Umgebungslichts gesteuert wird.

Bei der Positionierung von induktiven Übertragungseinrichtungen insbesondere an elektrisch angetriebenen Fahrzeugen muss dementsprechend entweder ein ungenügender Wirkungsgrad in Kauf genommen werden oder kostenaufwendige technische Assistenzsysteme zur Verfügung gestellt werden. Selbst die aufwendigen technischen Assistenzsysteme weisen die Einschränkung auf entsprechend ausgerüstete Übertragungspartner auf und sind daher bei beliebigen Übertragungsspulen nicht hilfreich und auf die Präzision der Positionierung des Fahrzeugs durch die Sinne und Fertigkeiten des Fahrers angewiesen.

Da der Wunsch besteht, elektrisch angetriebene Fahrzeuge sehr robust und bedienerfreundlich, aber auch sehr kostengünstig anbieten zu können, besteht der Bedarf nach einer Positionierungseinrichtung, welche unabhängig von der Ausrüstung des Übertragungspartners eine präzise Positionierung ohne Einschränkungen beispielsweise auch an öffentlich zugänglichen Ladestationen für elektrisch angetriebene Fahrzeuge durchführen kann, wenn dort keine zusätzlichen Mittel zur Positionierung zur Verfügung stehen.

### Offenbarung der Erfindung

Das erfindungsgemäße Verfahren mit dem Kennzeichen des Anspruchs 1 hat den Vorteil, dass eine Positionierungseinrichtung zur Verfügung gestellt wird, welche unabhängig von der Ausrüstung des Übertragungspartners eine präzise Positionierung ohne Einschränkungen beispielsweise auch an öffentlich zugänglichen Ladestationen für elektrisch angetriebene Fahrzeuge durchführen kann, wenn dort keine zusätzlichen Mittel zur Positionierung zur Verfügung stehen.

Erfindungsgemäß ist dazu ein Verfahren nach Anspruch 1 zum Betrieb einer induktiven Übertragungsvorrichtung bestehend aus einer Sendespule und einer Empfangsspule vorgesehen, wobei die Empfangsspule in einem Fahrzeug angeordnet ist und die Sendespule ortsfest angeordnet ist, umfassend in einem ersten Schritt das Aussenden eines Magnetfeldes durch die Sendespule, während sich in einem zweiten Schritt das Fahrzeug in Richtung einer Parkposition bewegt. Die Parkposition ist gekennzeichnet dadurch, dass die Empfangsspule in der Parkposition zumindest teilweise die Sendespule überdeckt. In einem dritten Schritt wird die magnetische Durchflutung der Empfangsspule gemessen. In einem vierten Schritt wird die Geschwindigkeit des Fahrzeugs beim Überschreiten eines ersten Schwellenwertes der magnetischen Durchflutung durch die Empfangsspule reduziert. In einem fünften Schritt wird die Unterschreitung eines zweiten Schwellenwertes der magnetischen Durchflutung der Empfangsspule detektiert. In einem sechsten Schritt wird ein Punkt ohne effektive magnetische Durchflutung durch die Empfangsspule detektiert. Die Detektion des Punktes ohne effektive magnetische Durchflutung der Empfangsspule hat den Vorteil, dass mit diesem Punkt eine Wegmarke für die Positionierung eines elektrisch angetriebenen Fahrzeugs ohne weitere zusätzliche Mittel zur Positionierung zur Verfügung gestellt werden kann. Die Reduktion der Geschwindigkeit beim Überschreiten des ersten Schwellenwerts hat den Vorteil, dass das Fahrzeug beim Erreichen der Parkposition am Punkt der optimalen Ausrichtung der induktiven Übertragungsvorrichtung bestehend aus einer Sendespule und einer Empfangsspule angehalten werden kann, um während des Ladevorgangs an diesem Punkt zu parken. Damit steht in vorteilhafter Weise eine Positionierungsinformation zur Verfügung, die ausschließlich mit den vorhandenen Komponenten der induktiven Übertragungseinrichtung eine präzise Positionierung ohne Einschränkungen an Ladestationen für elektrisch angetriebene Fahrzeuge ohne weitere zusätzliche Mittel zur Positionierung ermöglicht.

Durch die in den abhängigen Ansprüchen genannten Maßnahmen sind vorteilhafte Weiterbildungen des in dem unabhängigen Anspruch angegebenen Verfahrens möglich.

Vorteilhafterweise wird die Sendespule auf bzw. im Boden, auf bzw. in einer Wand oder an bzw. in einer Decke angeordnet. In vorteilhafter Weise kann das erfindungsgemäße Positionierungsverfahren bei jeder Spulenanordnung eingesetzt werden. Damit werden beispielsweise die Freiheiten bei dem Design von elektrisch angetriebenen Fahrzeugen nicht eingeschränkt. Die Sendespulen, welche auf bzw. in einer Wand oder an bzw. in einer Decke angeordnet sind, brauchen in vorteilhafter Weise beispielsweise nicht gegen die bei einer Überfahrt auftretenden Belastungen ausgelegt zu sein. Außerdem ist vorteilhaft, dass keine besondere Widerstandskraft gegen Straßenschmutz und aggressive Medien wie beispielsweise Streusalz gefordert ist.

Erfindungsgemäß wird das Fahrzeug in Fahrtrichtung nach der Detektion des Punktes ohne effektive magnetische Durchflutung so weit weiterbewegt werden, bis ein zweiter Punkt ohne effektive magnetische Durchflutung erreicht wird. Während der Bewegung des Fahrzeugs wird eine Fahrwegmessung zwischen den beiden Punkten ohne effektive magnetische Durchflutung durchgeführt und das Fahrzeug bei Erreichen des zweiten Punktes ohne effektive magnetische Durchflutung angehalten. Durch Halbieren des gemessenen Fahrwegs und zurückfahren des Fahrzeugs entgegen der Fahrtrichtung um die Hälfte der gemessenen Wegstrecke und Anhalten des Fahrzeugs nach der halben gemessenen Wegstrecke wird der Punkt der optimalen Ausrichtung der induktiven Übertragungsvorrichtung bestehend aus einer Sendespule und einer Empfangsspule erreicht. Damit wird vorteilhafterweise durch eine in jedem Fahrzeug zur Verfügung stehende Fahrwegmessung das Fahrzeug in einfacher und robuster Weise zu dem Punkt der optimalen Ausrichtung bewegt und dort angehalten, um während des Ladevorgangs an diesem Punkt zu parken.

In vorteilhafter Weise wird die Erkennung des Punktes ohne effektive magnetische Durchflutung durch die Empfangsspule über das Unterschreiten des zweiten Schwellenwertes der magnetischen Durchflutung durch die Empfangsspule, einen Vorzeichenwechsel der Steigung der Veränderung der magnetischen Durchflutung durch die Empfangsspule und das Überschreiten eines dritten Schwellenwertes der magnetischen Durchflutung durch die Empfangsspule erkannt. Besonders vorteilhaft ist die einfache und robuste Erkennung der Punkte ohne effektive magnetische Durchflutung durch die Empfangsspule ohne weitere Hilfsmittel.

Vorteilhaft ist, die Erkennung des zweiten Punktes ohne effektive magnetische Durchflutung durch die Empfangsspule über das Unterschreiten des dritten Schwellenwertes der magnetischen Durchflutung durch die Empfangsspule, einen Vorzeichenwechsel der Steigung der Veränderung der magnetischen Durchflutung durch die Empfangsspule und das Überschreiten eines zweiten Schwellenwertes der magnetischen Durchflutung durch die Empfangsspule durchzuführen. Von großem Vorteil ist, dass für die Erkennung des zweiten Punktes ohne effektive magnetische Durchflutung durch die Empfangsspule ebenfalls eine einfache und robuste Erkennung des Punktes ohne effektive magnetische Durchflutung durch die Empfangsspule ohne weitere Hilfsmittel zur Verfügung steht.

Günstig ist es, den Abstand zwischen den beiden Punkten ohne effektive magnetische Durchflutung durch die Empfangsspule aus einer Datenbank abzufragen und den durch die Wegmessung ermittelten Wert mit dem aus der Datenbank abgefragten Wert zu vergleichen, um bei einer Abweichung, die einen vierten Schwellenwert überschreitet, den Einparkvorgang zu wiederholen. Damit ist in vorteilhafter Weise unter Nutzung der einfachen und robusten Erkennung der Punkte ohne effektive magnetische Durchflutung durch die Empfangsspule ohne weitere Hilfsmittel die Erkennung einer unzureichend genauen Positionierung quer zur Fahrtrichtung des Fahrzeugs durchführbar.

Weitere Merkmale und Vorteile der vorliegenden Erfindung werden dem Fachmann aus der nachfolgenden Beschreibung beispielhafter Ausführungsformen, die jedoch nicht als die Erfindung beschränkend auszulegen sind, unter Bezugnahme auf die beigelegten Zeichnungen ersichtlich.

### Kurze Beschreibung der Zeichnungen

Es zeigen:
- Fig. 1:: eine schematische Darstellung eines nicht beanspruchten beispielhaften Verfahrens zum Betrieb einer induktiven Übertragungseinrichtung,
- Fig. 2:: eine schematische Darstellung eines weiteren nicht beanspruchten beispielhaften Verfahrens zum Betrieb einer induktiven Übertragungseinrichtung,
- Fig. 3:: eine schematische Darstellung eines Verfahrens zum Betrieb einer induktiven Übertragungseinrichtung gemäß einer Ausführungsform der vorliegenden Erfindung,
- Fig. 4:: eine schematische Darstellung eines elektrisch angetriebenen Fahrzeuges mit einem induktiven Übertragungssystem, bestehend aus einer Sendespule und einer Empfangsspule.
- Fig. 5:: eine schematische Darstellung des Felds einer Sendespule und der Geschwindigkeit des Fahrzeugs bis zum Stillstand in der Parkposition bei Nutzung von einem Punkt ohne effektive magnetische Durchflutung durch die Empfangsspule als nicht beanspruchtes Beispiel,
- Fig. 6:: eine schematische Darstellung des Felds einer Sendespule und der Geschwindigkeit des Fahrzeugs bis zum Stillstand in der Parkposition bei Nutzung von zwei Punkten ohne effektive magnetische Durchflutung durch die Empfangsspule gemäß der Ausführungsform der vorliegenden Erfindung.

Alle Figuren sind lediglich schematische Darstellungen des erfindungsgemäßen Verfahrens bzw. eines Ausführungsbeispiels eines erfindungsgemäß ausgerüsteten Fahrzeugs. Insbesondere Abstände und Größenrelationen sind in den Figuren nicht maßstabsgetreu wiedergegeben. In den verschiedenen Figuren sind sich entsprechende Elemente mit den gleichen Referenznummern versehen.

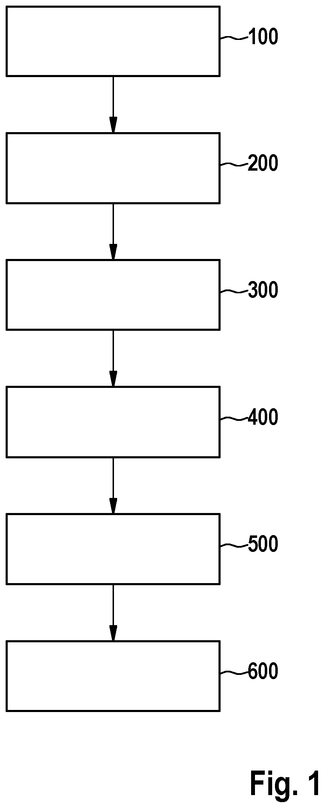

Figur 1 zeigt eine schematische Darstellung eines nicht beanspruchten beispielhaften Verfahrens zum Betrieb einer induktiven Übertragungseinrichtung. Im ersten Schritt 100 wird ein Magnetfeld 15 durch die Sendespule 11 ausgesandt. Im zweiten Schritt 200 bewegt sich das Fahrzeug 13 in Richtung der Parkposition 16. Im dritten Schritt 300 erfolgt die Messung der magnetischen Durchflutung der Empfangsspule 12. Das Fahrzeug 13 bewegt sich in diesem Schritt 300 unverändert weiter. Im vierten Schritt 400 wird die Überschreitung des ersten Schwellenwerts S1 der magnetischen Durchflutung durch die Empfangsspule detektiert. In diesem Schritt 400 wird die Fahrgeschwindigkeit des Fahrzeugs 13 soweit reduziert, dass das Fahrzeug 13 beim Erreichen des Punktes P3 angehalten werden kann. Im fünften Schritt 500 wird die Unterschreitung des zweiten Schwellenwerts S2 der magnetischen Durchflutung durch die Empfangsspule 12 detektiert. Das Fahrzeug 13 bewegt sich in diesem Schritt 500 unverändert weiter. Im sechsten Schritt 600 wird der Punkt P1 ohne effektive magnetische Durchflutung detektiert.

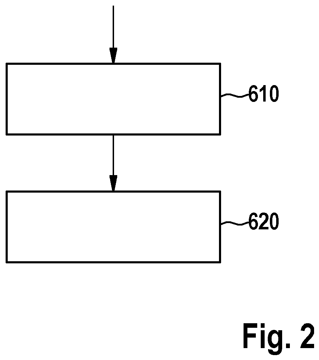

Figur 2 zeigt eine schematische Darstellung eines weiteren beispielhaften Verfahrens zum Betrieb einer induktiven Übertragungseinrichtung, das sich an das in Figur 1 gezeigte Verfahren anschließt. Im ersten Schritt 610 bewegt sich das Fahrzeug 13 unverändert weiter, während beispielsweise über Radsensoren die zurückgelegte Wegstrecke 17 zwischen den Punkten P1 und P3 erfasst wird. Im zweiten Schritt 620 wird über die Wegstreckenmessung das vollständige Zurücklegen der Wegstrecke 17 zwischen den Punkten P1 und P3 erkannt und das Fahrzeug 13 in seiner Parkposition 16 am Punkt P3 mit der maximalen effektiven magnetischen Durchflutung angehalten. Damit hat das Fahrzeug 13 den Punkt P3 mit der maximalen effektiven Durchflutung der Empfangsspule 12 in korrekter Ausrichtung erreicht und kann mit einem optimalen Koppelfaktor und damit hohem Wirkungsgrad geladen werden. Dies gilt ebenfalls bei bidirektionaler Nutzung der induktiven Übertragungseinrichtung zum Laden der Fahrzeugbatterie und zum Rückspeisen von elektrischer Energie aus der Fahrzeugbatterie in das Versorgungsnetz. Zur Durchführung dieses Verfahrens ist die Kenntnis der Wegstrecke 17 zwischen den Punkten P1 und P3 erforderlich. Diese Information kann im Fahrzeug 13 vorhanden sein oder über eine geeignete Kommunikationseinrichtung dem Fahrzeug 13 von der Sendespule 11 mitgeteilt werden.

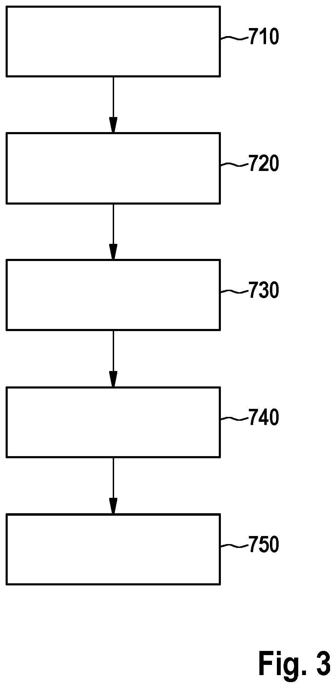

Figur 3 zeigt eine schematische Darstellung eines Verfahrens zum Betrieb einer induktiven Übertragungseinrichtung gemäß eines Ausführungsform der vorliegenden Erfindung, das sich an das in Figur 1 gezeigte Verfahren anschließt. Im ersten Schritt 710 bewegt sich das Fahrzeug 13 unverändert weiter, während beispielsweise über Radsensoren die zurückgelegte Wegstrecke 18 zwischen den Punkten P1 und P2 erfasst wird. Im zweiten Schritt 720 wird die Überschreitung des dritten Schwellenwertes S3 der magnetischen Durchflutung durch die Empfangsspule 12 detektiert. Das Fahrzeug 13 bewegt sich in diesem Schritt 720 unverändert weiter. Im dritten Schritt 730 wird die Unterschreitung des dritten Schwellenwerts S3 der magnetischen Durchflutung durch die Empfangsspule 12 detektiert. Das Fahrzeug 13 wird ab der Erkennung des dritten Schwellenwertes S3 in diesem Schritt 730 abgebremst. Im vierten Schritt 740 wird ein zweiter Punkt P2 ohne magnetische Durchflutung durch die Empfangsspule 12 detektiert. Das Fahrzeug wird angehalten. Die zwischen dem ersten Punkt P1 ohne magnetische Durchflutung durch die Empfangsspule 12 und dem zweiten Punkt P2 ohne magnetische Durchflutung durch die Empfangsspule 12 ermittelte Wegstrecke 18 zwischen den Punkten P1 und P2 wird halbiert und die Wegstrecke 19 zwischen den Punkten P2 und P3 ermittelt. Im fünften Schritt 750 fährt das Fahrzeug 13 um diese Wegstrecke 19 zwischen den Punkten P2 und P3 entgegen der Fahrtrichtung zurück und wird am Punkt P3 mit der maximalen effektiven magnetischen Durchflutung angehalten. Damit hat das Fahrzeug 13 den Punkt P3 mit der maximalen effektiven Durchflutung der Empfangsspule 12 in korrekter Ausrichtung erreicht und kann mit einem optimalen Koppelfaktor und damit hohem Wirkungsgrad geladen werden. Dieses Verfahren eignet sich besonders, wenn keine Informationen über die Wegstrecke 17 wischen den Punkten P1 und P3 vorliegen. Mit diesem Verfahren kann sich das Fahrzeug 13 selbst diese Wegstrecke 17 wischen den Punkten P1 und P3 durch das vollständige Überfahren der Sendespule 11 ermitteln. Weiterhin kann das Fahrzeug 11 durch das vollständige Überfahren der Sendespule 11 bei bekannter Wegstrecke 18 zwischen den Punkten P1 und P2 den seitlichen Versatz zwischen der Sendespule 11 und der Empfangsspule 12 ermitteln. Wenn sich bei der Wegmessung der Wegstrecke 18 zwischen den Punkten P1 und P2 durch das Fahrzeug 13 ein Wert ergibt, dessen Betrag der Differenz zu dem mitgeteilten bzw. bekannten Wert der Wegstrecke 18 einen Schwellenwert S4 überschreitet, ist der seitliche Versatz wischen der Sendespule 11 und der Empfangsspule 12 zu groß und es kann ein neuer Einparkvorgang des Fahrzeugs 13 an der induktiven Ladestation 10 eingeleitet werden.

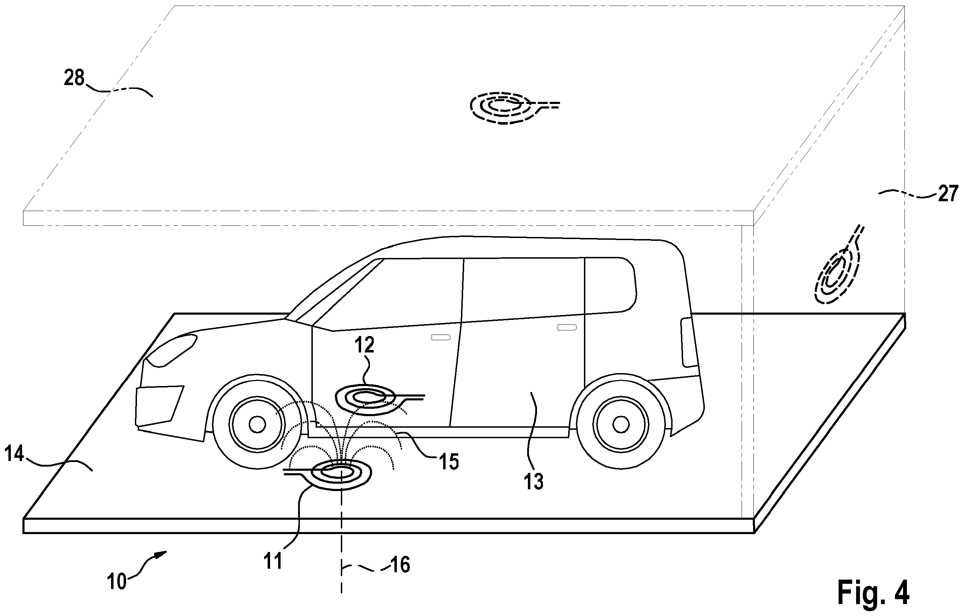

Figur 4 zeigt eine schematische Darstellung eines Fahrzeugs 13 mit einer induktiven Ladeeinrichtung 10. Das Fahrzeug steht auf einer Bodenfläche 14. In diese Bodenfläche 14 ist eine induktive Sendespule 11 zum Aufladen des elektrischen Energiespeichers des Fahrzeugs 13 eingelassen. In einer weiteren Ausführungsform kann die Sendespule 11 auf die Bodenfläche 14 aufgelegt sein.

An der Unterseite des Fahrzeugs 13 ist die Empfangsspule 12 angebracht, die während eines Ladevorgangs in der Parkposition 16 möglichst korrekt ausgerichtet über der Sendespule 11 positioniert sein muss, um einen optimalen Koppelfaktor und damit einen guten Systemwirkungsgrad der induktiven Ladevorrichtung 10 zu erreichen. Die Ausrichtung des Fahrzeugs 13 und damit der Empfangsspule 12 über der Sendespule 11 kann ohne weitere Hilfsmittel durch den Fahrer erfolgen. Die Ausrichtung des Fahrzeugs 13 in Querrichtung wird üblicherweise durch den Fahrer durchgeführt. Zusammen mit einer konstruktiv aufgeweiteten Quertoleranz der Empfangsspule 12 über der Sendespule 11 ist dies hinreichend genau. Die Längsausrichtung der Empfangsspule 12 über der Sendespule 11 ist alleine durch die Sinne und Fertigkeiten des Fahrers schwieriger durchzuführen und kann in der Regel durch den Fahrer ohne weitere Hilfsmittel nicht hinreichend genau ausgeführt werden. Weitere Ausführungsformen ergeben sich durch die Anordnung der Sendespule 11 an oder in einer Wand 27 oder an oder in einer Decke 28 und der entsprechenden Anordnung der Empfangsspule 12 des Fahrzeugs 13.

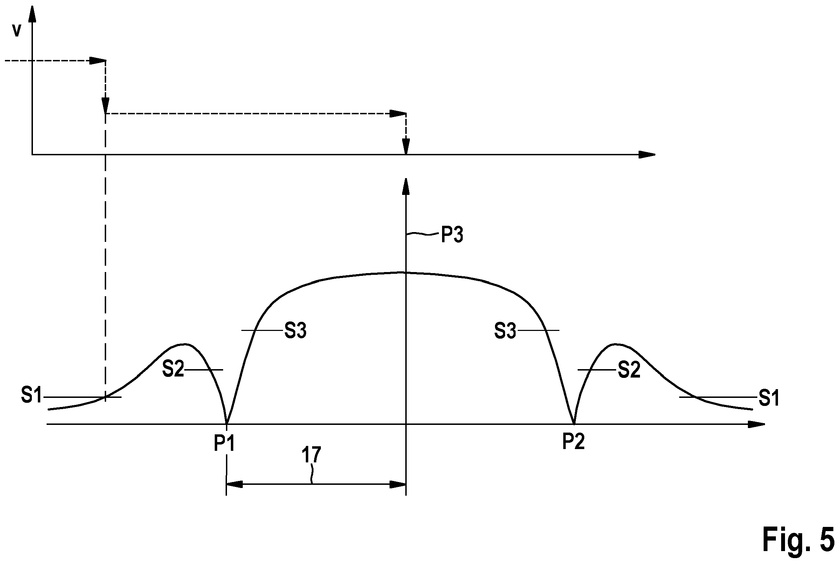

Figur 5 zeigt eine schematische Darstellung des Felds einer Sendespule 11 und der Geschwindigkeit des Fahrzeugs 13 bis zum Stillstand mit Erkennung eines Punktes P1 ohne effektive magnetische Durchflutung durch die Empfangsspule 12 als nicht beanspruchtes

Beispiel. In dieser Darstellung nähert sich das Fahrzeug 13 der Sendespule 11 von links. Beim Erkennen des Überschreitens des ersten Schwellenwertes S1 wird die Fahrgeschwindigkeit des Fahrzeugs 13 gesenkt. Nach der Erkennung des Unterschreitens des zweiten Schwellenwertes S2 und der Erkennung des Punktes P1 ohne effektive magnetische Durchflutung der Empfangsspule 12 wird ab dem Punkt P1 ohne effektive magnetische Durchflutung der Empfangsspule 12 die Wegmessung der Wegstrecke 17 zwischen den Punkten P1 und P3 gestartet. Nach dem vollständigen Zurücklegen der Wegstrecke 17 zwischen den Punkten P1 und P3 wird das Fahrzeug 13 in seiner Parkposition 16 am Punkt P3 mit der maximalen effektiven magnetischen Durchflutung der Empfangsspule 12 angehalten und für den Ladevorgang geparkt.

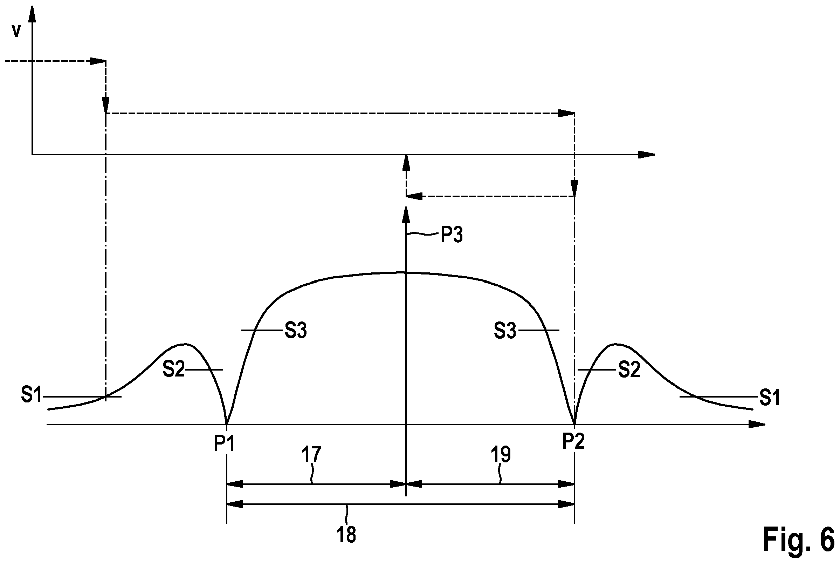

Figur 6 zeigt eine schematische Darstellung des Felds einer Sendespule 11 und der Geschwindigkeit des Fahrzeugs 13 bis zum Stillstand bei Erkennung eines Punktes P1 ohne effektive magnetische Durchflutung durch die Empfangsspule 12 gemäß der Ausführungsform der vorliegenden Erfindung. In dieser Darstellung nähert sich das Fahrzeug 13 der Sendespule 11 von links. Beim Erkennen des Überschreitens des ersten Schwellenwertes S1 wird die Fahrgeschwindigkeit des Fahrzeugs 13 gesenkt. Ab der Erkennung des Punktes P1 ohne effektive magnetische Durchflutung der Empfangsspule 12 wird die Wegmessung der Wegstrecke 18 zwischen den Punkten P1 und P2 gestartet. Bei Erkennung des zweiten Punktes P2 ohne effektive magnetische Durchflutung der Empfangsspule 12 wird das Fahrzeug angehalten und rechnerisch die gemessene Wegstrecke 18 halbiert. Um die so ermittelte Wegstrecke 19 zwischen den Punkten P2 und P3 fährt das Fahrzeug 13 um die Wegstrecke 19 zwischen den Punkten P2 und P3 entgegen der Fahrtrichtung zurück und wird am Punkt P3 mit der maximalen effektiven magnetischen Durchflutung der Empfangsspule 12 angehalten und für den Ladevorgang geparkt. Damit hat das Fahrzeug 13 den Punkt P3 mit der maximalen effektiven Durchflutung der Empfangsspule 12 in korrekter Ausrichtung erreicht und kann mit einem optimalen Koppelfaktor und damit hohem Wirkungsgrad geladen werden. Wenn der Wert für die Wegstrecke 18 zwischen den Punkten P1 und P2 bekannt ist, kann ein Vergleich zwischen dem gemessenen Wert der Wegstrecke 18 zwischen den Punkten P1 und P2 und dem aus einer Datenbank 31 bekannten Wert der Wegstrecke 18 durchgeführt werden. Wenn die Differenz der gemessene Wegstrecke 18 zu der aus einer Datenbank 31 bekannten Wegstrecke 18 größer ist als ein vierter Schwellenwert S4 wurde das Fahrzeug 13 mit einem zu großen Querversatz über der Sendespule 11 positioniert und es kann ein neuer Einparkvorgang des Fahrzeugs 13 an der induktiven Übertragungsvorrichtung bestehend aus einer Sendespule und einer Empfangsspule eingeleitet werden.

## Patentansprüche

1. Verfahren zum Betrieb einer induktiven Übertragungsvorrichtung (10) bestehend aus einer Sendespule (11) und einer Empfangsspule (12), wobei die Empfangsspule (12) in einem Fahrzeug (13) angeordnet ist und die Sendespule (11) ortsfest angeordnet ist, mit den Schritten:
Aussenden eines Magnetfeldes (15) durch die Sendespule (11);
Bewegung des Fahrzeugs (13) in Richtung einer Parkposition (16), wobei die Empfangsspule (12) in der Parkposition (16) zumindest teilweise die Sendespule (11) überdeckt;
Messung einer magnetischen Durchflutung der Empfangsspule (12);
Reduktion einer Geschwindigkeit des Fahrzeugs (13) beim Überschreiten eines ersten Schwellenwertes (S1) der magnetischen Durchflutung durch die Empfangsspule (12);
Detektion der Unterschreitung eines zweiten Schwellenwertes (S2) der magnetischen Durchflutung durch die Empfangsspule (12);
Detektion eines ersten Punktes (P1) ohne effektive magnetische Durchflutung durch die Empfangsspule (12);
**dadurch gekennzeichnet, dass**
das Fahrzeug (13) in Fahrtrichtung weiterbewegt wird,
parallel eine Messung der zurückgelegten Wegstrecke erfolgt und ein zweiter Punkt (P2) ohne effektive magnetische Durchflutung durch die Empfangsspule (12) während der Bewegung des Fahrzeugs (13) detektiert wird,
das Fahrzeug (13) beim Erreichen des zweiten Punktes (P2) ohne effektive magnetische Durchflutung durch die Empfangsspule (12) und Ermittlung einer zwischen dem ersten Punkt (P1) und dem zweiten Punkt (P2) zurückgelegten Wegstrecke (18) angehalten wird,
die entgegen der Fahrtrichtung bis zur Parkposition (16) zurückzulegende Wegstrecke (19) durch Halbierung der Wegstrecke (18) berechnet wird, und
das Fahrzeug (13) entgegen der Fahrtrichtung um die Wegstrecke (19) von dem zweiten Punkt (P2) ohne effektive magnetische Durchflutung bis zu der Parkposition (16) mit einer zumindest teilweisen Überdeckung der Empfangsspule (12) mit der ortsfesten Sendespule (11) bewegt wird.

2. Verfahren nach Anspruch 1 **dadurch gekennzeichnet, dass** die Sendespule (11) im Boden (14), in einer Wand (27) oder in einer Decke (28) angeordnet ist.

3. Verfahren nach einem der vorhergehenden Ansprüche, wobei zur Detektion des ersten Punktes (P1) ohne effektive magnetische Durchflutung durch die Empfangsspule (12) das Unterschreiten eines zweiten Schwellenwertes (S2) der magnetischen Durchflutung durch die Empfangsspule (12) erkannt wird, der Vorzeichenwechsel der Steigung der magnetischen Durchflutung durch die Empfangsspule (12) erkannt wird und das Überschreiten eines dritten Schwellenwertes (S3) der magnetischen Durchflutung durch die Empfangsspule (12) erkannt wird.

4. Verfahren nach Anspruch 1, wobei zur Detektion des zweiten Punktes (P2) ohne effektive magnetische Durchflutung durch die Empfangsspule (12) das Unterschreiten eines dritten Schwellenwertes (S3) der magnetischen Durchflutung durch die Empfangsspule (12) erkannt wird, der Vorzeichenwechsel der Steigung der magnetischen Durchflutung durch die Empfangsspule (12) erkannt wird und das Überscheiten des zweiten Schwellenwertes (S2) der magnetischen Durchflutung durch die Empfangsspule (12) erkannt wird.

5. Verfahren nach Anspruch 1,
**dadurch gekennzeichnet, dass** der Abstand (31) zwischen dem ersten Punkt (P1) und dem zweiten Punkt (P2) der Sendespule (11) aus einer Datenbank (30) abgefragt wird, die ermittelte Wegstrecke (18) mit dem aus der Datenbank (30) ermittelten Abstand (31) verglichen wird und eine Abweichung (32) ermittelt wird und beim Überschreiten eines vierten Schwellenwertes (S4) durch den Betrag der Abweichung (32) der Einparkvorgang wiederholt wird.

## Claims

1. Method for operating an inductive transmission apparatus (10) consisting of a transmission coil (11) and a reception coil (12), wherein the reception coil (12) is arranged in a vehicle (13) and the transmission coil (11) is arranged at a fixed location, having the steps of:
transmitting a magnetic field (15) by means of the transmission coil (11);
moving the vehicle (13) in the direction of a parking position (16), wherein the reception coil (12) covers at least part of the transmission coil (11) in the parking position (16);
measuring a magnetic flux passing through the reception coil (12);
reducing a velocity of the vehicle (13) when a first threshold value (S1) for the magnetic flux passing through the reception coil (12) is exceeded;
detecting a drop below a second threshold value (S2) for the magnetic flux passing through the reception coil (12);
detecting a first point (P1) without effective magnetic flux passing through the reception coil (12);
**characterized in that**
the vehicle (13) is moved on in the direction of travel,
at the same time the distance covered is measured and a second point (P2) without effective magnetic flux passing through the reception coil (12) is detected during the movement of the vehicle (13),
the vehicle (13) is stopped when the second point (P2) without effective magnetic flux passing through the reception coil (12) is reached and a distance (18) covered between the first point (P1) and the second point (P2) is ascertained,
the distance (19) to be covered contrary to the direction of travel up to the parking position (16) is calculated by halving the distance (18), and
the vehicle (13) is moved contrary to the direction of travel by the distance (19) from the second point (P2) without effective magnetic flux passing through to the parking position (16) in which at least part of the reception coil (12) is covered by the transmission coil (11) at the fixed location.

2. Method according to Claim 1, **characterized in that** the transmission coil (11) is arranged in the floor (14), in a wall (27) or in a ceiling (28).

3. Method according to either of the preceding claims, wherein the first point (P1) without effective magnetic flux passing through the reception coil (12) is detected by detecting the drop below a second threshold value (S2) for the magnetic flux passing through the reception coil (12), detecting the change of arithmetic sign of the gradient of the magnetic flux passing through the reception coil (12) and detecting the exceeding of a third threshold value (S3) for the magnetic flux passing through the reception coil (12).

4. Method according to Claim 1, wherein the second point (P2) without effective magnetic flux passing through the reception coil (12) is detected by detecting the drop below a third threshold value (S3) for the magnetic flux passing through the reception coil (12), detecting the change of arithmetic sign of the gradient of the magnetic flux passing through the reception coil (12) and detecting the exceeding of the second threshold value (S2) for the magnetic flux passing through the reception coil (12).

5. Method according to Claim 1, **characterized in that** the interval (31) between the first point (P1) and the second point (P2) of the transmission coil (11) is queried from a database (30), the ascertained distance (18) is compared with the interval (31) ascertained from the database (30) and a difference (32) is ascertained, and the parking process is repeated if a fourth threshold value (S4) is exceeded by the absolute value of the difference (32).

## Revendications

1. Procédé permettant de faire fonctionner un dispositif de transmission par induction (10) composé d'une bobine émettrice (11) et d'une bobine réceptrice (12), la bobine réceptrice (12) étant disposée dans un véhicule (13) et la bobine émettrice (11) étant disposée de manière stationnaire, comprenant les étapes consistant à :
émettre un champ magnétique (15) à travers la bobine émettrice (11) ;
déplacer le véhicule (13) en direction d'une position de stationnement (16), la bobine réceptrice (12) dans la position de stationnement (16) recouvrant au moins en partie la bobine émettrice (11) ;
mesurer une force magnétomotrice de la bobine réceptrice (12) ;
réduire une vitesse du véhicule (13) en cas de dépassement d'une première valeur seuil (S1) de la force magnétomotrice à travers la bobine réceptrice (12) ;
détecter le soupassement d'une deuxième valeur seuil (S2) de la force magnétomotrice à travers la bobine réceptrice (12) ;
détecter un premier point (P1) sans force magnétomotrice effective à travers la bobine réceptrice (12) ;
**caractérisé en ce que**
le véhicule (13) continue à se déplacer dans le sens de la marche,
en parallèle, une mesure du chemin parcouru est effectuée, et un deuxième point (P2) sans force magnétomotrice effective à travers la bobine réceptrice (12) est détecté pendant le déplacement du véhicule (13) ,
le véhicule (13) est arrêté lorsqu'il atteint le deuxième point (P2) sans force magnétomotrice effective à travers la bobine réceptrice (12) et lorsqu'un chemin (18) parcouru entre le premier point (P1) et le deuxième point (P2) est déterminé,
le chemin (19) à parcourir dans le sens contraire au sens de la marche jusqu'à la position de stationnement (16) est calculé en divisant le chemin (18) par deux, et
le véhicule (13) est déplacé dans le sens contraire au sens de la marche sur le chemin (19) du deuxième point (P2) sans force magnétomotrice effective jusqu'à la position de stationnement (16) avec un recouvrement au moins partiel de la bobine réceptrice (12) avec la bobine émettrice (11) stationnaire.

2. Procédé selon la revendication 1, **caractérisé en ce que** la bobine émettrice (11) est disposée dans le plancher (14), dans une paroi (27) ou dans un plafond (28) .

3. Procédé selon l'une quelconque des revendications précédentes, dans lequel, pour la détection du premier point (P1) sans force magnétomotrice effective à travers la bobine réceptrice (12), le soupassement d'une deuxième valeur seuil (S2) de la force magnétomotrice à travers la bobine réceptrice (12) est identifié, le changement de signe de la pente de la force magnétomotrice à travers la bobine réceptrice (12) est identifié, et le dépassement d'une troisième valeur seuil (S3) de la force magnétomotrice à travers la bobine réceptrice (12) est identifié.

4. Procédé selon la revendication 1, dans lequel, pour la détection du deuxième point (P2) sans force magnétomotrice effective à travers la bobine réceptrice (12), le soupassement d'une troisième valeur seuil (S3) de la force magnétomotrice à travers la bobine réceptrice (12) est identifié, le changement de signe de la pente de la force magnétomotrice à travers la bobine réceptrice (12) est identifié, et le dépassement de la deuxième valeur seuil (S2) de la force magnétomotrice à travers la bobine réceptrice (12) est identifié.

5. Procédé selon la revendication 1, **caractérisé en ce que** la distance (31) entre le premier point (P1) et le deuxième point (P2) de la bobine émettrice (11) est extraite d'une base de données (30), le chemin déterminé (18) est comparé avec la distance (31) déterminée à partir de la base de données (30), et un écart (32) est déterminé, et le processus de stationnement est répété en cas de dépassement d'une quatrième valeur seuil (S4) par la valeur de l'écart (32) .
